# EUROPEAN PATENT APPLICATION

(11) **EP 1 138 595 A1**
(43) Date of publication of application: **04.10.2001**
(21) Application number: 00830240.8
(22) Date of filing: 30.03.2000
(51) Int. Cl.: B65B 3/30, B65B 57/14, B65B 9/20, G01F 23/72, G01F 23/76

(54) **Packaging machine for producing sealed packages of a pourable food and featuring a level detecting device**

(71) Applicant: Tetra Laval Holdings & Finance SA, 1009 Pully (CH)
(72) Inventor: Paltrinieri, Roberto, 41033 Concordia (IT); Benedetti, Paolo, 41100 Modena (IT); Fini, Alberto, 41012 Carpi (IT); Cattini, Alberto, 42018 San Martino in Rio (IT)
(74) Representative: Franzolin, Luigi

(57) **Abstract**

There is described a packaging machine (1) for producing sealed packages (2) of a pourable food product from a tube (3) made of heat-seal sheet packaging material (4) and filled continuously with the pourable food product. The packaging machine has a detecting device (9) for detecting the level of the pourable food product, and which has a float (10) made predominantly of polymer material. More specifically, the float has a casing (35) in turn having a base element (12), a cover (13) and a sealing element (17), which are made of a copolymer of cycloolefins (COC) and linear olefins.

## Description

The present invention relates to a packaging machine for producing sealed packages of a pourable food product and featuring a level detecting device.

Many pourable food products, such as fruit juice, pasteurized or UHT (ultra-high-temperature-processed) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material. The laminated packaging material comprises layers of fibrous material, e.g. paper, covered on both sides with thermoplastic material, e.g. polyethylene; and the side of the packaging material eventually contacting the food product in the package also has a barrier layer, e.g. an aluminium sheet, in turn covered with a layer of thermoplastic material.

As is known, such packages are produced on fully automatic packaging units, on which a continuous tube is formed from the packaging material supplied in strip form; the strip of packaging material is sterilized on the packaging unit, e.g. by applying a chemical sterilizing agent, such as a hydrogen peroxide solution, which is later removed, e.g. vaporized by heating, from the surfaces of the packaging material; and the strip of packaging material so sterilized is kept in a closed sterile environment, and is folded into a cylinder and sealed longitudinally to form a continuous, longitudinally sealed, vertical tube.

The tube is then filled with the sterilized or sterile-processed food product, and is sealed and cut at equally spaced cross sections to form pillow packs, which are then conveyed to a final folding station where they are folded mechanically to form the finished packages.

More specifically, the food product is fed from a hold tank into the tube of packaging material along a fill conduit extending inside the tube of packaging material.

To ensure a substantially constant food product level inside the tube of packaging material during formation of the packages, known packaging machines normally also comprise level control devices comprising a level detecting device for detecting the level of the food product inside the tube, and a control device for controlling a flow regulating solenoid valve and operating on the basis of a signal from the level detecting device.

Numerous detecting devices are known. Some feature a float housed inside the tube of packaging material, and the position of which is detected by means of mechanical devices also housed inside the tube of packaging material, or by means of Hall-effect sensors located outside the tube of packaging material, and which detect the presence of magnetic elements on the float.

Normally used floats must be made of biocompatible material, and must be resistant to high temperature, to prolonged contact with any acid or fatty substances in the food products, or to the sterilizing agents used to wash the packaging machine, particularly if combined with streams of hot air typical of vertical-fill packaging machines. For all of which reasons, the floats are normally made of steel or titanium.

Due to the thinness of the walls to reduce weight, however, steel or titanium floats wear rapidly, are subject to frequent breakage, and must therefore be replaced frequently at high cost. Moreover, any holes formed in the float as a result of wear let in the food product, thus impairing correct operation of the float.

It is an object of the present invention to provide a float designed to eliminate the aforementioned drawbacks, and which, moreover, provides for rapidly determining wear of the float and infiltration of the food product, and which can be sealed to ensure the necessary degree of airtightness.

According to the present invention, there is provided a packaging machine for producing sealed packages of a pourable food product from a tube of heat-seal sheet packaging material; said tube being filled continuously with said pourable food product; said packaging machine comprising a detecting device; and said detecting device comprising a float; characterized in that said float is made of polymer material.

A preferred, non-limiting embodiment of the present invention will be described by way of example with reference to the accompanying drawings, in which:
Figure 1 shows a view in perspective of a packaging machine for producing aseptic sealed packages of a pourable food product from a tube of packaging material;
Figure 2 shows a schematic view in perspective of the Figure 1 tube of packaging material filled continuously with the food product, and a first embodiment of a float-type detecting device for detecting the food product level in the tube;
Figure 3 shows a partially sectioned view in perspective of the Figure 2 float;
Figure 4 shows an exploded view of the basic elements of the Figure 2 float;
Figure 5 shows a larger-scale view in perspective of one of the basic elements in Figure 4;
Figure 6 shows an axial section of the Figure 3 float;
Figure 7 shows an axial section of a second embodiment of a float in accordance with the present invention.

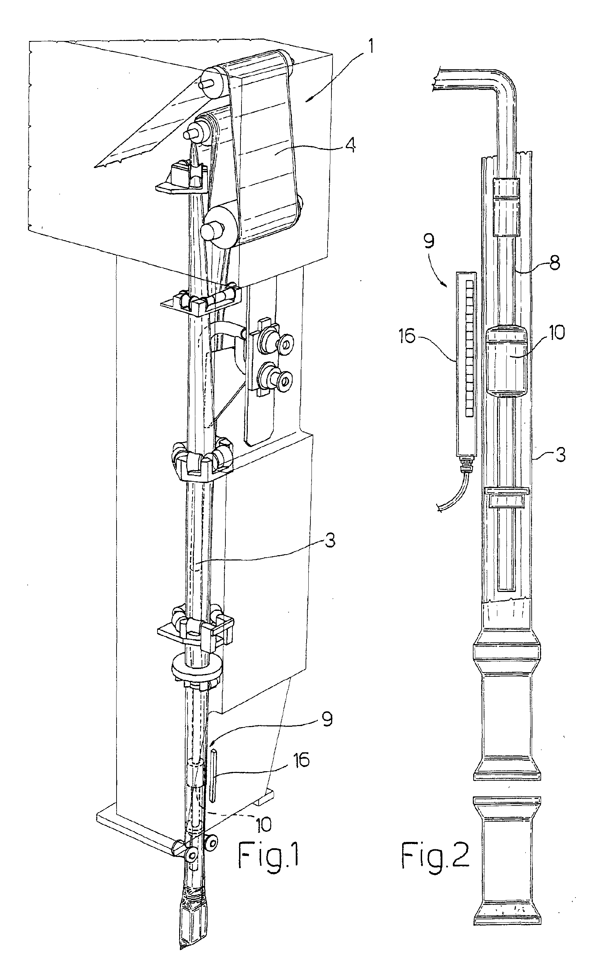

Number 1 in Figure 1 indicates as a whole a packaging machine for producing sealed packages 2 of a pourable food product, such as pasteurized or UHT milk, fruit juice, wine, etc., from a tube 3 of packaging material 4 having a longitudinal axis A.

Packaging material 4 has a multilayer structure (not shown), and comprises a layer of fibrous material, normally paper, covered on both sides with respective layers of heat-seal plastic material, e.g. polyethylene.

Tube 3 is formed in known manner - therefore not described or shown - by folding and longitudinally sealing a strip of packaging material 4, is filled with the sterilized or sterile-processed food product by means of a fill conduit 8 extending coaxially inside tube 3 and having a known flow regulating solenoid valve (not shown), and is fed by known devices along axis A to a forming station, where it is cut transversely and folded mechanically to form packages 2.

Packaging machine 1 comprises a device 9 for detecting the pourable food product level inside tube 3, and of the type comprising a float 10 mounted to slide axially on an end portion of fill conduit 8, and in turn comprising a magnetic-field generating unit 7, and a Hall-effect sensor 16 located outside tube 3 and interacting, in use, with unit 7 to generate a level signal S by which to regulate pourable food product flow into tube 3.

With particular reference to Figures 2 to 6, float 10 is as a whole toroidal with a central opening 11 engaged by the end portion of fill conduit 8, and is defined by a number of elements mainly made of polymer material.

More specifically, float 10 comprises a toroidal base element 12 defining a cavity 18 and communicating externally via an end opening 19; a cover 13 for closing opening 19; an annular intermediate element 14 supporting unit 9 and housed inside cavity 18; and a sealing element or region 17 for sealing cover 13 to base element 12.

Base element 12, cover 13 and sealing element 17 are advantageously made of polymer material, the low density of which permits an increase in wall thickness of over 2 mm.

Float 10 is formed by fitting together base element 12 and cover 13 - both injection molded - and subsequently injecting polymer material onto cover 13 and at the contact region between cover 13 and base element 12, to form sealing element 17.

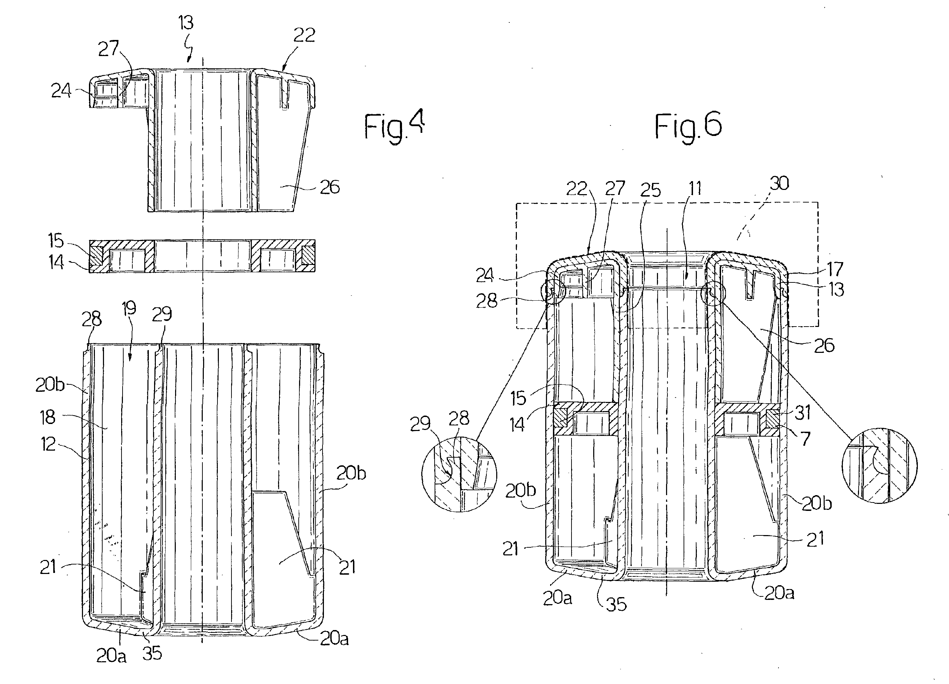

More specifically, and as shown in Figure 4, base element 12 is defined by an annular disk-shaped base wall 20a opposite opening 19, and by two cylindrical lateral walls 20b projecting from respective peripheral edges of base wall 20a, so that opening 19 is defined by respective free end edges 28 of lateral walls 20b.

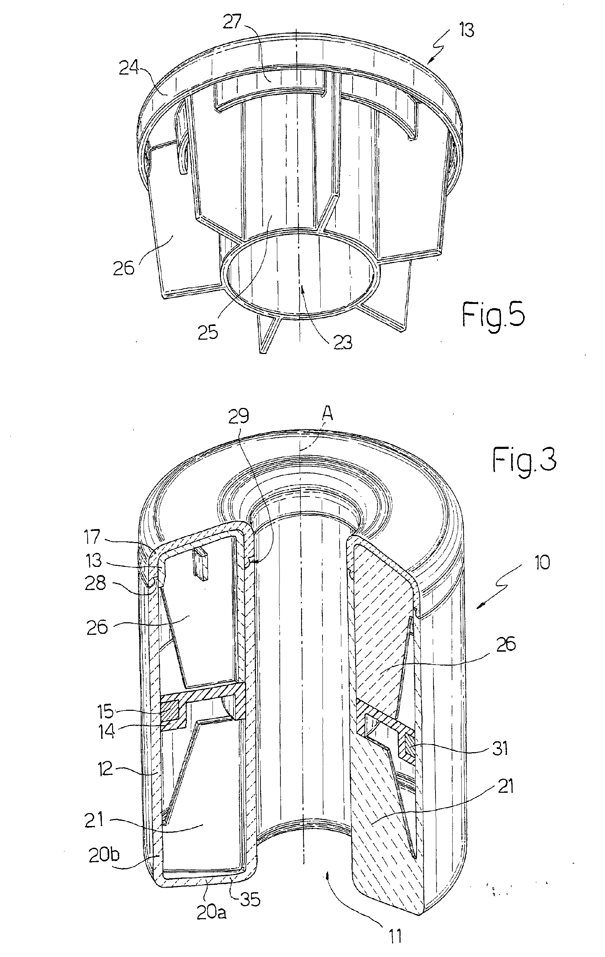

In the first embodiment shown in detail in Figures 3-6, base element 12 also comprises one or more reinforcing elements in turn comprising a number of reinforcing fins 21 housed inside cavity 18, equally spaced angularly about axis A, and integral with base wall 20a and lateral walls 20b.

More specifically, fins 21 are substantially right-trapezium-shaped and project from base wall 20a to about half the axial height of cavity 18.

As shown in the enlarged detail in Figure 6, at the end of the molding stage, the end edges 28 of lateral walls 20b of base element 12 may be shaped, e.g. on a lathe, to better secure sealing element 17 to base element 12 when injecting the polymer material. In particular, an outer annular cavity 29 with a curved concave profile is formed on edges 28.

With reference to Figures 3, 4 and 6, annular element 14 is generally made of metal, and supports, on the radially outer periphery, a number of angularly equally spaced magnets 15 defining, as a whole, unit 7.

Annular element 14 is inserted inside cavity 18 of base element 12 so as to rest on the free ends of reinforcing fins 21.

With reference to Figures 3 to 6, cover 13 comprises a disk-shaped wall 22 having a central through opening 23 of the same section as central opening 11 of base element 12; and a hollow cylindrical portion 25 projecting from the inner peripheral edge of disk-shaped wall 22.

Cover 13 also comprises a number of reinforcing fins 26 extending radially from cylindrical portion 25 to a projecting radially outer edge 24, and connected to one another by a cylindrical reinforcing flange 27 projecting from disk-shaped wall 22 and radially inner with respect to edge 24.

Cover 13 is fitted to base element 12 by placing edge 24 at the mouth of opening 19 and inwards of edge 28 of relative lateral wall 20b, and placing the cylindrical portion inside cavity 18 and contacting the other lateral wall 20b, so that reinforcing tabs 26 rest on and axially lock annular element 14.

At this point, the float 10 so formed is placed inside a known molding chamber 30 (not shown in detail), in which polymer material is injected to form sealing element 17 for sealing float 10.

More specifically, the polymer material is injected onto cover 13 and at the contact region between cover 13 and base element 12 so as to fill cavity 29.

In the first embodiment, base element 12, cover 13 and sealing element 17 advantageously define, as a whole, a casing 35.

Casing 35 is made of amorphous, transparent polymer material for immediately detecting any infiltration of the food product inside float 10.

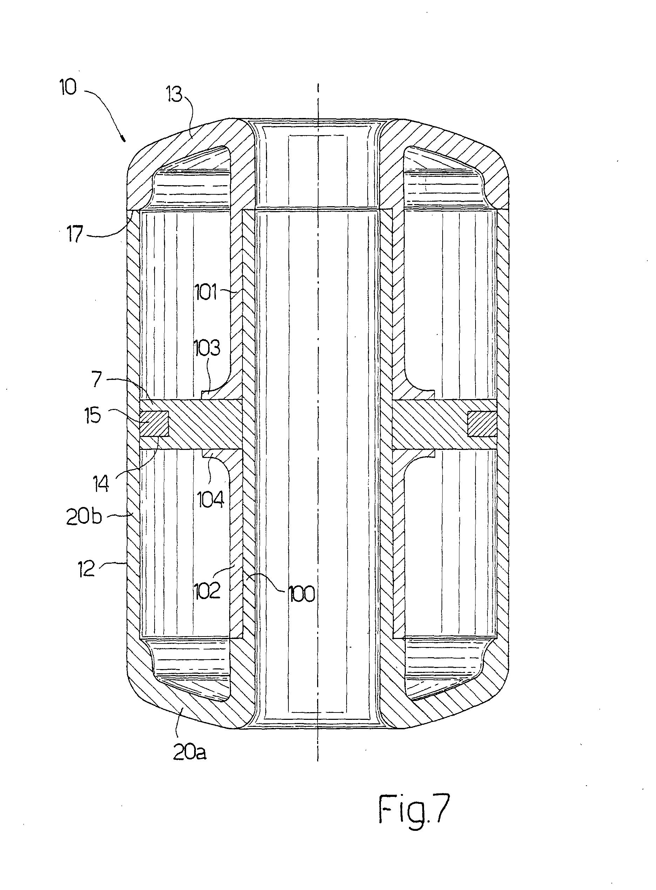

In a second embodiment shown in Figure 7, the end edges 28 of lateral walls 20b and the cover 13 defining a sealing element 17 have flat surfaces, which are brought into contact for soldering using the known hot-plate soldering technique. The plate is then removed and lateral walls 20b pressed against cover 13 long enough to solder the surfaces.

Base element 12 also comprises a cavity 100 housing toroidal supporting elements 101, 102 defining respective projections 103, 104 for supporting, in between, magnetic-field generating unit 7.

In the second embodiment, casing 35 is defined by cover 13 itself.

The polymer material from which the elements of float 10 are made preferably comprises a polyolefin-based copolymer, even more preferably a cycloolefin and linear olefin copolymer.

For example, the polymer material is a cycloolefin copolymer of the type described in patents EP 694567 and EP 694568.

In particular, the cycloolefin copolymers preferably comprise:
from 0.1 to 99.89%, of the entire mass of the cycloolefin copolymer, of polymerization units (A) obtained from a cyclic olefin;
from 0 to 80%, of the entire mass of the cycloolefin copolymer, of polymerization units (B) obtained from an acyclic olefin;
from 0.01 to 50%, of the entire mass of the cycloolefin copolymer, of polymerization units (C) comprising at least one functionalized structural unit, which:
   a) derives from a cyclic olefin and contains at least one heteroatom attached directly to an atom in the cyclic olefin ring; or
   b) derives from a cyclic or acyclic olefin and contains at least one atomic group having two heteroatoms both attached to the same carbon atom; or
   c) derives from a cyclic or acyclic olefin and contains at least one aldehyde group; or
   d) derives from a cyclic or acyclic olefin and contains at least one atomic group in which an oxygen atom is attached to a carbon atom with a double bond; in which, if the functionalized structural unit derives from a cyclic olefin, two adjacent carbon atoms of the functionalized structural unit are present in the main chain of the polymer.

In particular, polymerization units (A) preferably derive from cycloolefins of formula (I), (II), (III), (IV), (V), (VI) e (VII), where R¹, R², R³, R⁴, R⁵, R⁶, R⁷ and R⁸ are the same or different, and are a hydrogen atom or a hydrocarbon substitute, such as an alkyl group C₁-C₈ or an aryl group C₆-C₁₄,, in which like substitutes in different formulas may have different meanings, and n is a number from 2 to 10.

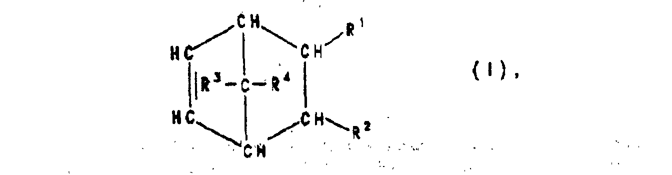

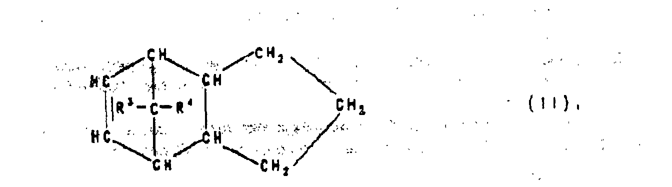

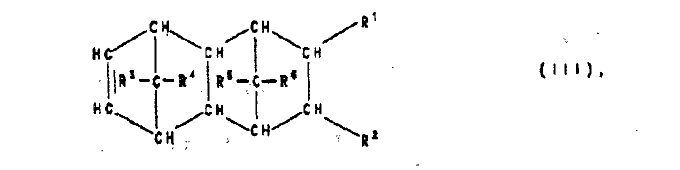

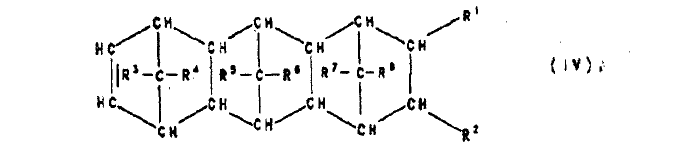

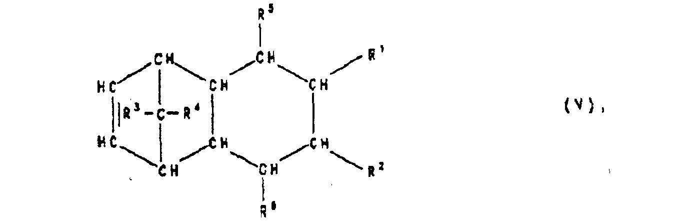

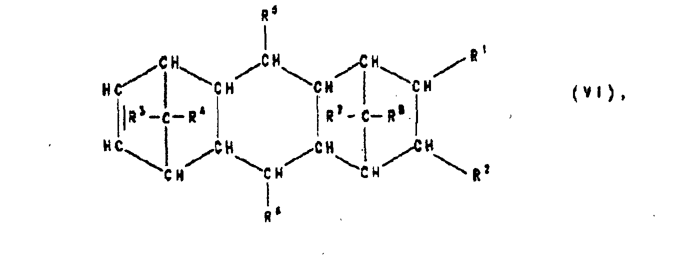

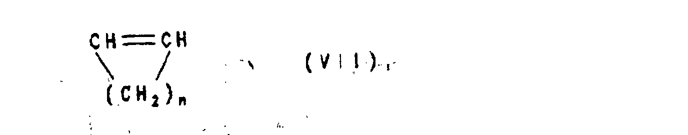

Particularly preferred are polymerization units (A) deriving from norbornene.

Polymerization units (B) preferably derive from linear monolefins, e.g. α-olefins with 2 to 20 carbon atoms, in particular, ethylene and propylene.

Polymerization units (C) preferably derive from compounds of formula (XIV), (XV), (XVI), (XVII), (XVIII), (XIX) , in which R¹⁶, R¹⁷, R¹⁸, R¹⁹, R²⁰, R²¹ are the same or different, like substitutes in different formulas may have different meanings and may be a hydrogen atom, a hydrocarbon substitute C₁-C₃₀, such as an alkyl group C₁-C₈ or a aryl group C₆-C₁₄, a primary, secondary or tertiary amine group, a substituted or unsubstituted ammonium group, a hydroxyl group, an alkyloxy group, an aryloxy group, an arylalkyloxy group, an (X)ₚ-Y group, in which X is a branched or unbranched alkyl group C₂-C₂₀ or a branched or unbranched arylalkyl group C₈-C₂₀, p=0 or 1, and Y is a carboxy group, an alkyloxycarbonyl group, a carbamoyl group, a mono or bisalkylcarbamoyl group, a chloroformyl group, an acyloxycarbonyl group, a thiocarboxy group, an alkylthiocarbonyl group, a formyl group, an alkylformyl group, a hydroxybis(alkyloxy)-methyl group, a tri(alkyloxy)methyl group, a hydroxyiminomethyl group, a hydrazonomethyl or a semicarbazonomethyl group, in which at least one of substitutes R¹⁶, R¹⁷, R¹⁸, R¹⁹, R²⁰, R²¹ in formulas (XIV) e (XVIII), at least two of substitutes R¹⁶, R¹⁷, R¹⁸, R¹⁹, R²⁰, R²¹ in formulas (XV), (XVI), (XIX), and none of the substitutes in formula (XVII) are an (X)ₚ-Y group, a primary, secondary or tertiary amine group, a substituted or unsubstituted ammonium group, a hydroxyl group, an alkyloxy group, an aryloxy group or an alkylaryloxy group.

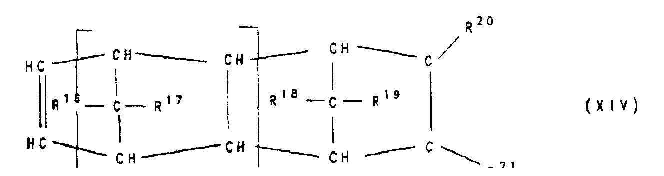

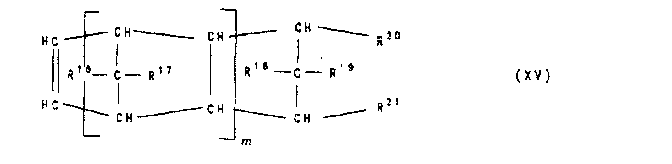

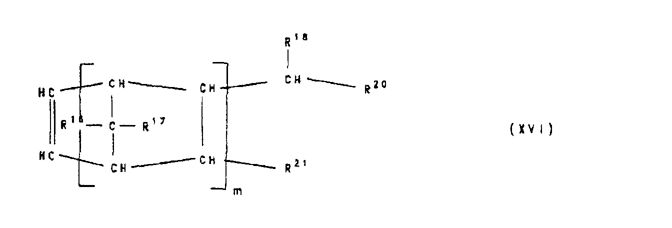

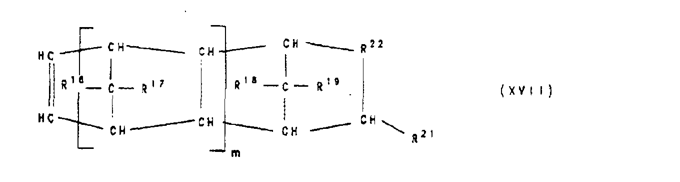

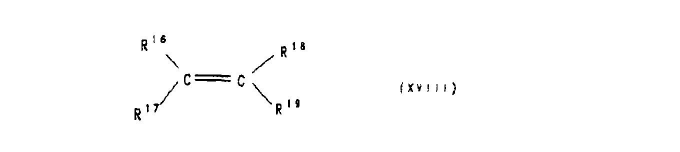

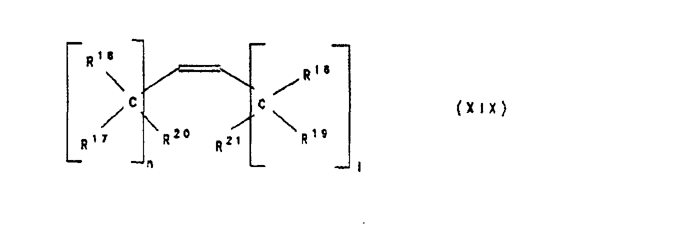

The advantages of the packaging machine comprising a float made of polymer material in accordance with the present invention will be clear from the foregoing description.

In particular, a float made of polymer material is highly resistant to acids, bases, polar solvents and sterilizing and washing agents, and is biocompatible. The low density of the material provides for producing lightweight floats, even with very thick walls, thus reducing the risk of breakage; and the float may be made of transparent material for immediately detecting any infiltration of the food product inside the float.

Moreover, a float made of polymer material is much cheaper to produce than a metal float.

Clearly, changes may be made to the packaging machine as described and illustrated herein - in particular, the float may be made from a different polymer material - without, however, departing from the scope of the present invention.

## Claims

1. A packaging machine (1) for producing sealed packages (2) of a pourable food product from a tube (3) of heat-seal sheet packaging material (4); said tube (3) being filled continuously with said pourable food product; said packaging machine (1) comprising a detecting device (9) for detecting the level of said pourable food product inside said tube (3); and said detecting device comprising a float (10); **characterized in that** said float (10) is made predominantly of polymer material.

2. A packaging machine as claimed in Claim 1, **characterized in that** said float (10) comprises at least one casing (35) made of polymer material.

3. A packaging machine as claimed in Claim 2, **characterized in that** said casing (35) comprises at least one base element (12) and a cover (13).

4. A packaging machine as claimed in Claim 3, **characterized in that** said casing (35) comprises a sealing element (17) for sealing said cover (13) and said base element (12) to each other.

5. A packaging machine as claimed in Claim 4, **characterized in that** said sealing element (17) is of polymer material on said cover (13), and is located at the contact region between the cover (13) and said base element (12).

6. A packaging machine as claimed in Claims 1 to 5, **characterized in that** said float (10) comprises magnetic-field generating means housed inside said casing (35).

7. A packaging machine as claimed in Claims 1 to 6, **characterized in that** said polymer material is amorphous and transparent to permit visual inspection of any liquid penetrating the device.

8. A packaging machine as claimed in any one of Claims 1 to 7, **characterized in that** said polymer material comprises cycloolefins.

9. A packaging machine as claimed in Claim 8, **characterized in that** said polymer material comprises a copolymer of linear olefins and cycloolefins.

10. A packaging machine as claimed in Claim 9, **characterized in that** said copolymer of linear olefins and cyclic olefins comprises base units of formula: (I), (II), (III), (IV), (V), (VI) e (VII), where R¹, R², R³, R⁴, R⁴, R⁵, R⁶, R⁷ and R⁸ are the same or different, and are a hydrogen atom or a hydrocarbon substitute, such as an alkyl group C₁-C₈ or an aryl group C₆-C₁₄,, in which like substitutes in different formulas may have different meanings, and n is a number from 2 to 10.
